# EUROPÄISCHE PATENTSCHRIFT

(11) **EP 2 742 157 B1**
(45) Veröffentlichungstag und Bekanntmachung des Hinweises auf die Patenterteilung: **15.07.2015**
(21) Anmeldenummer: 12780166.0
(22) Anmeldetag: 25.10.2012
(51) Int. Cl.: C21C 5/52

(54) **VERFAHREN ZUM BETREIBEN EINES LICHTBOGENOFENS**
METHOD FOR OPERATING AN ARC OVEN
PROCÉDÉ DESTINÉ AU FONCTIONNEMENT D'UN FOUR À ARC LUMINEUX

(30) Priorität: 03.11.2011 EP 11187639
(43) Veröffentlichungstag der Anmeldung: 18.06.2014
(73) Patentinhaber: Primetals Technologies Germany GmbH, 91052 Erlangen (DE)
(72) Erfinder: KRÜGER, Klaus, 83416 Saaldorf-Surheim (DE); MATSCHULLAT, Thomas, 90542 Eckental (DE); DÖBBELER, Arno, 91074 Herzogenaurach (DE)
(74) Vertreter: Metals@Linz
(86) Internationale Anmeldenummer: PCT/EP2012/071107
(87) Internationale Veröffentlichungsnummer: WO 2013/064413

(56) Entgegenhaltungen:
- EP-A1- 0 122 910
- EP-A1- 0 292 469
- DE-A1- 4 130 397

## Beschreibung

Die Erfindung betrifft ein Verfahren zum Betreiben eines Lichtbogenofens, insbesondere eines Elektrolichtbogenofens, mit wenigstens einer Elektrode, wobei ein Schmelzgut im Lichtbogenofen mittels eines von der wenigstens einen Elektrode erzeugten Plasmalichtbogens geschmolzen wird. Als Schmelzgut wird hierbei zu schmelzender Feststoff, Flüssigmetall und/oder auch Schlacke verstanden. Die Anmeldung betrifft weiterhin eine Signalverarbeitungseinrichtung für einen Lichtbogenofen, einen maschinenlesbaren Programmcode für eine Signalverarbeitungseinrichtung für einen Lichtbogenofen sowie ein Speichermedium mit einem darauf gespeicherten derartigen maschinenlesbaren Programmcode. Die Anmeldung betrifft schließlich einen Lichtbogenofen, insbesondere Elektrolichtbogenofen, mit einer derartigen Signalverarbeitungseinrichtung.

Ein Lichtbogenofen dient zur Herstellung von Flüssigmetall, in der Regel Stahl. Das Flüssigmetall wird aus einem festen Schmelzgut, etwa Schrott oder reduziertem Eisen, zusammen mit weiteren Zuschlagstoffen, hergestellt. Hierzu wird zu Prozessbeginn der Lichtbogenofen mit Schrott und/oder reduziertem Eisen beschickt und dann werden Plasmalichtbögen zwischen Elektroden des Lichtbogenofens und dem Schmelzgut gezündet. Die durch den Plasmalichtbogen in den Lichtbogenofen eingebrachte Energie führt zum Aufschmelzen des restlichen Schmelzguts. Derartige Lichtbogenöfen sind z.B. in den Offenlegungsschriften DE 0 122 910 A1, DE 41 30 397 A1 und EP 0 292 469 A1 beschrieben.

Die elektrische Anschlussleistung von Lichtbogenöfen steigt kontinuierlich an. Während in den 1980er Jahren 100 MVA noch als Spitzenwert galten, liegt die typische Leistung von neuen Ofenanlagen heute in der Größenordnung von 150 MVA. Vereinzelt sind bereits Lichtbogenöfen mit mehr als 200 MVA Anschlussleistung in Betrieb. Grundsätzlich sind hohe Anschlussleistungen attraktiv, da sie eine hohe Produktivität bei geringen spezifischen Personal- und Investitionskosten ermöglichen.

Die hohen Schmelzleistungen gehen mit hohen Lichtbogenströmen und insbesondere mit hohen Lichtbogenspannungen einher. Die zugehörigen langen und leistungsstarken Lichtbögen stellen für die Prozessführung eine erhebliche Herausforderung dar. Die Lichtbögen müssen zu jedem Zeitpunkt ausreichend mit Schrott bzw. Schaumschlacke umhüllt sein, um so ein effizientes Einbringen der Energie zu ermöglichen und Beschädigungen des Ofengefäßes zu vermeiden. Entsprechend ist auf ein Niederschmelzen des Schrottes oder ein Zusammenfallen der Schaumschlacke schnell mit einer deutlichen Reduzierung der Lichtbogenlänge und damit der Schmelzleistung zu reagieren. Insbesondere kann z.B. bei der Rostfrei-Produktion aufgrund der nicht vorhandenen Schaumschlacke bei flüssigem Bad nur mit reduzierter Lichtbogenleistung gearbeitet werden.

Eine weitere Steigerung der Leistung von Dreh- und Gleichstrom-Lichtbögen über eine Erhöhung der Spannung erscheint aufgrund der resultierenden langen Lichtbögen kaum möglich. Gegen eine Leistungssteigerung über den Strom sprechen die resultierenden hohen Zuleitungsverluste, Limitierungen bei den Betriebsmitteln, wie z.B. den Elektroden.

Während des Einschmelzens des Schrottguts kommt es durch die Schrottbewegungen und durch die variierenden Plasmabedingungen im Lichtbogen zu erheblichen Stromschwankungen. Diese Stromschwankungen verursachen Störungen im Versorgungsnetz, welche durch den sogenannten Flickerwert beschrieben werden. Bei gegebener Netzkurzschlussleistung nimmt der Flickerwert proportional mit der Ofenleistung zu.

Den oben genannten Herausforderungen wird bisher auf verschiedenen Weisen begegnet. Die Schmelzleistung wird z.B. automatisiert an die aktuellen Prozessbedingungen angepasst, im einfachsten Fall erfolgt dies über thermisch basierte Leistungsregelungen, wie dies in Dorndorf, M., Wichert, W., Schubert, M., Kempken, J., Krüger, K.: Holistic Control of EAF's Energy and Material Flows. 3rd International Steel Conference on New Developments in Metallurgical Process Technologies, Düsseldorf, 11.-15.06.2007, S. 513-520*,* beschrieben ist.

Neuerdings erfolgt die Anpassung der Schmelzleistung an die aktuellen Prozessbedingungen auch über eine körperschallbasierte Leistungsregelung, siehe Dittmer, B., Krüger, K., Rieger, D., Matschullat, T., Döbbeler, A.: Asymmetrical Power Control of AC-EAFs by Structure-Borne Sound Evaluation, Iron & Steel Technology Conference 2010, Pittsburgh, 03.-06.05.2010, S. 937-946*.*

Grundsätzlich wird mit diesen Regelungen übermäßiger Verschleiß des Ofengefäßes vermieden, dafür müssen jedoch Produktionsabschnitte mit teilweise deutlich reduzierter Schmelzleistung in Kauf genommen werden. Weiterhin wird die Injektion von Feinkohle und damit die Schaumschlackenbildung automatisiert geregelt, siehe Homeyer, K.: Automatisierung der Kohlezugabe zur Schaumschlackenbildung im Lichtbogenofen, Dr.-Ing. Dissertation, Universität der Bundeswehr Hamburg (2000*),* VDI-Forschungsberichte, Reihe 8, no. 862, VDI-Verlag, Düsseldorf 2001 und Matschullat, T., Wichert, W., Rieger, D.: Foaming Slag in More Dimensions - A New Detection Method with Carbon Control, AISTech 2007, Indianapolis 07. -10. Mai 2007*.*

Schließlich sind Bemühungen zu nennen, auch bei der rostfrei-Produktion so etwas wie Schaumschlacke aufzubauen, siehe Reichel, J., Rose, L., Cotchen, J.K., Damazio, M.A., Loss, H.B., Pinto E.M.: EAF Foamy Slag in Stainless Steel Production: Industrial Experiences and Further Development, Iron & Steel Technology Conference 2010, Pittsburgh, 03. -06. 05.2010, S. 793-799*.*

Mit erfolgreicher Schaumschlackenbildung, was nicht per se garantiert ist, ist auch während der Flüssigbadphase grundsätzlich ein Schmelzbetrieb mit hoher Leistung möglich. Zur Begrenzung des Flickerwertes ist bei Lichtbogenöfen hoher Leistung, respektive bei schwachen Netzen, die Installation einer dynamischen Blindleistungskompensationsanlage erforderlich. Jedoch ist auch mit derartigen Anlagen maximal eine 5-fache Reduzierung eines Flickerwertes möglich.

Der Erfindung liegt die Aufgabe zugrunde, eine Effizienz- und Leistungssteigerung eines Lichtbogenofens zu realisieren.

Die Aufgabe wird erfindungsgemäß gelöst durch ein Verfahren zum Betreiben eines Lichtbogenofens mit wenigstens einer Elektrode, wobei ein Schmelzgut im Lichtbogenofen mittels eines von der wenigstens einen Elektrode erzeugen Plasmalichtbogens geschmolzen wird und wobei der Plasmalichtbogen reguliert wird, indem ein Zusatzstoff, der die Plasmazusammensetzung beeinflusst, in das Plasma eingebracht wird. Dabei wird zur Verringerung der Feldstärke des Plasmalichtbogens mindestens ein Zusatzstoff mit geringer Ionisationsenergie, insbesondere ein Metall oder ein Metallsalz, in das Plasma eingebracht und zur Erhöhung der Feldstärke des Plasmalichtbogens wird mindestens ein Zusatzstoff mit hoher Ionisationsenergie, insbesondere ein Intergas, in das Plasma eingebracht.

Unter Plasmazusammensetzung wird hierbei insbesondere eine Plasmaatmosphäre verstanden. Die Plasmaeigenschaften hängen dabei von der Plasmazusammensetzung ab.

Bisher wurde davon ausgegangen, dass die Zusammensetzung des Lichtbogenplasmas durch den Prozess vorgegeben ist. Dabei bestimmt die aktuelle Plasmazusammensetzung die Stabilität und die Zündwilligkeit des Lichtbogens. Sie hat so während des Schmelzens erheblichen Einfluss auf das Flickerverhalten.

Die Erfindung basiert auf der Idee, verschiedene Zusatzstoffe, insbesondere Gase, aber auch Feststoff-Aerosole bzw. Stäube, geregelt in das Lichtbogenplasma einzubringen, um so die Eigenschaften des Plasmalichtbogens gezielt und dynamisch an die aktuellen Prozessbedürfnisse anzupassen. Die Zusatzstoffe werden dabei insbesondere direkt in das Plasma eingespeist und wirken unmittelbar auf das Plasma und ändern seine physikalischen und/oder chemischen Eigenschaften wie z.B. seine Ionisierbarkeit, Rekombinationszeit, Leitfähigkeit und/oder Feldstärke. Das Verhalten des Plasmas ist sowohl über die Art als auch über den Anteil des in das Plasma eingebrachten Zusatzstoffes oder Zusatzstoffe gezielt einstellbar. Die Beeinflussung der Plasmazusammensetzung und somit der Eigenschaften des Plasmalichtbogens kann sowohl bei Gleichstrom- als auch bei Drehstrom-Lichtbögen angewendet werden. Ebenso ist die Regelung der Leitfähigkeit des Plasmalichtbogens auch für Pfannenöfen anwendbar. Auch für Sonderschmelzanlagen, wie für einen elektrischen Reduktionsofen (im Englischen: Submerged Arc Furnace), ist eine gezielte Einstellung der Leitfähigkeit bzw. der Feldstärke des Plasmalichtbogens übertragbar.

Ausgangspunkt ist ein konstanter Lichtbogenstrom, der durch eine entsprechende Regelung eingestellt wird. Die Lichtbogenleistung ist dabei direkt proportional zum Produkt von Lichtbogenlänge, Feldstärke des Lichtbogens und Lichtbogenstrom. Wenn der Lichtbogenstrom konstant ist, können somit die Feldstärke bzw. die Lichtbogenlänge variiert werden, um eine gewünschte Leistung zu erreichen. Durch eine Modifikation der Plasmaatmosphäre lässt sich die Feldstärke definiert einstellen.

Die Steigerung der Schmelzleistung des Plasmalichtbogens durch die gezielte Modifikation des Plasmas ist gleichbedeutend mit einer stufenlosen Anpassung der Plasmaeigenschaften an die aktuellen Plasmabedingungen, wodurch ein ruhiger Lichtbogen-betrieb mit hoher und effizienter Leistungseinbringung realisiert ist.

Zur Verringerung der Feldstärke (bzw. zur Erhöhung der Leitfähigkeit) des Plasmalichtbogens ein Zusatzstoff mit geringer Ionisationsenergie, insbesondere ein Metall oder ein Metallsalz, in das Plasma eingebracht. Geeignet zur Erhöhung der Leitfähigkeit und Verlängerung der Rekombinationszeit der Ladungsträger im Plasma des Lichtbogens sind z.B. Lithium, Natrium, Kalium und Aluminium als Metalle oder entsprechende Salze. Zum Anfahren und zum Schrottschmelzen bzw. generell bei unruhigem Schmelzbetrieb wird das Plasma so modifiziert, dass es leicht ionisierbar ist, langsam rekombiniert und eine hohe Leitfähigkeit bzw. eine geringe Feldstärke aufweist. Ein Plasma mit hoher Leitfähigkeit und geringer Feldstärke ist vor allem beim Schrottschmelzen, d.h. wenn der Feststoffanteil im Lichtbogenofen hoch ist, von Vorteil. Durch den Zusatzstoff wird der Licht-bogen stabilisiert und der Flickerwert wird geringer. Es liegt dabei ein großvolumiges Einschmelzen des Schrotts vor.

Zur Erhöhung der Feldstärke (bzw. zur Verringerung der Leitfähigkeit) des Plasmalichtbogens wird wiederum ein Zusatzstoff mit hoher Ionisationsenergie, insbesondere ein Inertgas, in das Plasma eingebracht. Insbesondere für den Betrieb auf flüssigem Bad wird das Plasma so modifiziert, dass es eine geringe Leitfähigkeit bzw. hohe Feldstärke aufweist. Diese folgt beispielsweise durch die Injektion von Helium oder Argon. Alternativ sind auch Wasserstoff bzw. wasserstoffhaltige Gase, wie Propan, Stickstoff sowie Sauerstoff bzw. Kohlenmonoxid oder -dioxid, für diese Anwendung geeignet. Die resultierenden kurzen Lichtbögen bedeuten geringere Strahlungsbelastung für die Ofenwand. Erzielt werden dabei hohe Leistungen auch bei geringem Schlackenpegel. Auch ein häufiges Umschalten der Transformatorstufe lässt sich vermeiden.

Unter einem Zusatzstoff mit hoher Ionisierungsenergie wird hierbei ein Zusatzstoff verstanden, dessen Ionisierungsenergie über 10 eV, insbesondere über 15 eV, liegt. Hierzu gehören die Edelgase sowie wasserstoffhaltige Gase, wie z.B. Propan. Unter Zusatzstoff mit geringer Ionisierungsenergie wird zudem ein Zusatzstoff verstanden, dessen Ionisierungsenergie unterhalb 10 eV, insbesondere unter 8 eV, liegt. Zusatzstoffe mit geringer Ionisierungsenergie sind z.B. die Alkalimetalle und Aluminium sowie ihre Metallsalze.

Bevorzugt wird ein Prozesszustand des Schmelzprozesses, insbesondere der reale Prozesszustand, bestimmt und in Abhängigkeit des Prozesszustandes wird die Feldstärke (bzw. die Leitfähigkeit) des Plasmalichtbogens reguliert. Unter Prozesszustand wird hierbei der reale Prozesszustand des Schmelzvorganges verstanden. Der Schmelzvorgang weist verschiedene Entwicklungsphasen auf, in denen das Verhältnis zwischen Feststoff und flüssigem Bad im Lichtbogenofen sich unterscheidet, so dass die Anforderungen an den Lichtbogen ebenfalls unterschiedlich sind. Die Bestimmung des realen Prozesszustandes des Schmelzvorganges ist somit die Voraussetzung für eine optimale Regelung der Lichtbogeneigenschaften und somit für eine Steigerung der Effizienz und/oder der Leistung des Lichtbogenofens. Die Detektion des aktuellen Prozesszustandes erfolgt beispielsweise über die eingebrachte Energie. Zur präziseren Beschreibung des Schmelzvorganges können insbesondere der thermische Zustand des Lichtbogenofens, der Zeitverlauf der Ströme und der Spannungen sowie Schall- oder Körperschallsignale herangezogen werden.

Neben der Art des eingebrachten Zusatzstoffes ist auch eine Einstellung der Plasmabedingungen bzw. -eigenschaften auch über die Menge des mindestens einen Zusatzstoffes vorgesehen. Die erforderliche Menge des mindestens einen eingebrachten Zusatzstoffes ergibt sich im Wesentlichen aus dem Lichtbogenvolumen, sie ist damit proportional zur Lichtbogenleistung. Vorzugsweise wird daher die Menge der eingebrachten Zusatzstoffe im Bereich 0,1 bis 50 m³/h pro MW Lichtbogenleistung, insbesondere im Bereich 5 bis 10 m³/h pro MW Lichtbogenleistung dosiert. Zweckdienlicherweise erfolgt eine indirekte Steuerung über den Vordruck P_{abs} des Systems.

Nach einer bevorzugten Ausführungsform sind die Zusatzstoffe gasförmig oder liegen als Aerosol vor und werden über eine Regelung des Gasdruckes dosiert. Die Regelung des Gasstromes basiert dabei insbesondere auf der Ermittlung des Prozesszustandes, z.B. bei einer zu hohen Temperaturbelastung des Ofengefäßes werden entsprechende Maßnahmen zur Regulierung des Plasmalichtbogens getroffen. Ergänzend oder alternativ kann für die Regelung des Gasstromes ein Fahrdiagramm des Licht-bogenofens vorliegen, der auf empirischen Werten basiert.

Vorteilhafterweise ist die wenigstens eine Elektrode als Hohlelektrode ausgebildet und der mindestens eine Zusatzstoff wird über die Elektrode zugeführt. Wenn eine Gaszuführung in einer Graphitelektrode integriert ist, führt dies zum positiven Nebeneffekt, dass das eingedüste Gas die Elektrode kühlt und ggf. sogar einhüllt, was den Elektrodenabbrand im Betrieb der Elektrode verringert. Im Falle einer Graphitelektrode kann es je nach zugeführtem Zusatzstoff auch zu einer Reformreaktion kommen, die aufgrund ihres Energieverbrauches ebenfalls zu einer Kühlung der Elektrode führt.

Alternativ oder ergänzend zur Hohlelektrode werden die Zusatzstoffe vorteilhafterweise über Injektoren durch eine Ofenwand oder einen Ofendeckel in den Lichtbogenofen eingespeist oder die Zusatzstoffe werden über Spülsteine am Boden des Lichtbogenofens injiziert. Die separaten Zufuhrvorrichtungen oder Injektoren an der Ofenwand, am Ofendeckel oder am Ofenboden münden insbesondere möglichst nahe an der Elektrode und somit am Plasma, so dass der Zusatzstoff insbesondere direkt ins Plasma injiziert wird.

Die Aufgabe wird weiterhin erfindungsgemäß gelöst durch eine Signalverarbeitungseinrichtung für einen Lichtbogenofen, mit einem maschinenlesbaren Programmcode, welcher Steuerbefehle aufweist, die die Signalverarbeitungseinrichtung zur Durchführung des Verfahrens nach einer der oben beschriebenen Ausführungen veranlassen. Die Aufgabe wird zudem erfindungsgemäß gelöst durch einen maschinenlesbaren Programmcode für eine Signalverarbeitungseinrichtung für einen Lichtbogenofen, wobei der Programmcode Steuerbefehle aufweist, die die Signalverarbeitungseinrichtung zur Durchführung des Verfahrens nach einer der oben beschriebenen Ausführungen veranlassen. Die Aufgabe wird auch erfindungsgemäß gelöst durch ein Speichermedium mit einem darauf gespeicherten derartigen maschinenlesbaren Programmcode.

Schließlich wird die Aufgabe erfindungsgemäß gelöst durch einen Lichtbogenofen, insbesondere einen Elektrolichtbogenofen, mit wenigstens einer Elektrode zum Schmelzen eines Schmelzguts mittels eines von der wenigstens einen Elektrode erzeugten Plasmalichtbogens und mit der o. g. Signalverarbeitungseinrichtung. Die Elektrode ist dabei bevorzugt als Hohlelektrode für die Zufuhr der Zusatzstoffe ausgebildet. Außerdem sind zweckdienlicherweise Injektoren für die Zusatzstoffe an einer Ofenwand oder an einem Ofendeckel oder Spülsteine für die Injektion der Zusatzstoffe am Boden des Lichtbogenofens vorgesehen.

Die Erhöhung der Plasmaleitfähigkeit und Verzögerung der Rekombination beim Schrottschmelzen führt zu einem deutlich stabileren Lichtbogenbetrieb mit wesentlich geringeren Stromschwankungen und Flickerwerten und zu einem sinusförmigen Stromverlauf. Ebenso wirkt sich der stabile Lichtbogen positiv auf den Elektrodenabbrand aus.

Ein Ausführungsbeispiel der Erfindung wird anhand einer Zeichnung näher erläutert. Hierin zeigen:
- FIG 1: eine Fahrweise eines herkömmlichen Lichtbogenofens,
- FIG 2: eine optimierte Fahrweise eines Lichtbogenofens mit einer Regulierung der Plasmaatmosphäre, und
- FIG 3: ein Blockschaltbild der Injektionsregelung eines die Plasmazusammensetzung beeinflussenden Zusatzstoffes.

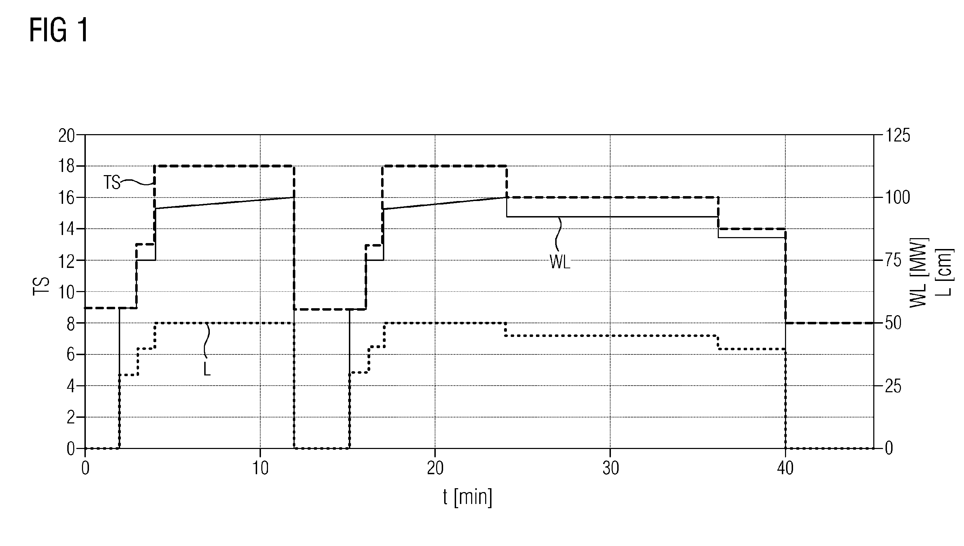

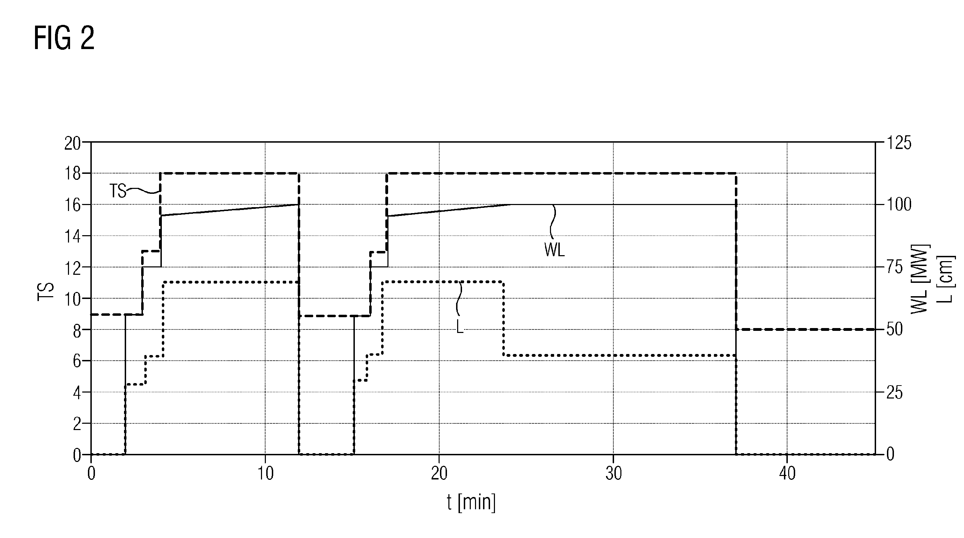

In FIG 1 und 2 ist der Verlauf der Transformatorstufen TS, einer Wirkleistung WL [MW] sowie einer Lichtbogenlänge L [cm] über die Zeit t [min] im Betrieb eines herkömmlichen Lichtbogenofens (FIG 1) und eines Lichtbogenofens mit einer Plasmaregelung über einen Zusatzstoff (FIG 2) gezeigt.

Bei beiden Betriebsweisen wird der jeweilige, hier nicht näher gezeigte Lichtbogenofen mit einem Korb festen Schmelzguts chargiert und angefahren. Das Zünden der Lichtbögen erfolgt circa bei Minute 3. Beim folgenden einschmelzen des Einsatzgutes brennen die Lichtbögen auf Grund der Dynamik des Einsatzgutes und dem Wanderns des Fußpunktes relativ instabil. Gemäß FIG 2 wird daher dem Plasma des Lichtbogens ein Zusatzstoff mit hoher Ionisationsenergie wie z.B. ein Inertgas, Wasserstoff oder Methan zugegeben, damit die Leitfähigkeit des Plasmas erhöht bzw. seine Feldstärke verringert wird. Die Länge des Lichtbogens erreicht dabei insbesondere etwa 70 cm, d.h. sie ist um ca. 20 cm länger als die Länge des Lichtbogens im herkömmlich betriebenen Lichtbogenofen gemäß FIG 1. Der verlängerte Plasmalichtbogen schmilzt den festen Schrott großvolumiger als der Lichtbogen gemäß FIG 1. Es liegt dabei ein effizienterer Schmelzbetrieb vor, der einen geringeren Energiebedarf nach sich zieht. Die Anpassung der Leitfähigkeit des Lichtbogens hat zudem den Vorteil, dass die Stromschwankungen und insbesondere der Flickerwert deutlich reduziert sind. Durch die Vorgabe einer geeigneten Plasmaatmosphäre kann weiterhin ein sinusförmiger Verlauf von Lichtbogenstrom und -spannung erreicht werden. Der Strom-Klirrfaktor bzw. die Strom-Harmonischen gehen damit deutlich zurück. Entsprechend können Filterkreise entfallen bzw. wird das Versorgungsnetz weniger belastet.

Circa 15 Minuten nach dem Beginn des Schmelzvorganges wird dem jeweiligen Lichtbogenofen ein zweiter Korb mit Schrott zugeführt. Zum Schmelzen des zweiten Korbes wird der Lichtbogen ebenfalls verlängert.

Circa ab der 24-ten Minute ist auch der Feststoff aus dem zweiten Korb bereits geschmolzen. Damit nun nicht zu viel Strahlung an die Ofenwände abgegeben wird, wird gemäß FIG 2 die Leitfähigkeit geringer und die Lichtbogenlänge L kürzer eingestellt, indem in den Plasmalichtbogen ein leicht ionisierbares Metall oder Metallsalz, beispielsweise Aluminium, Calcium oder Kalium eingebracht wird. Es kann dabei eine Reduzierung der Strahlungsbelastung um 2/3 erfolgen oder bei der gleichen Strahlungsbelastung wird eine um 50 % höhere Schmelzleistung erzielt. Zudem wird durch das Anpassen des Plasmas ein mehrfaches Umschalten der Transformatorstufen TS vermieden, wie dies aus dem Vergleich der FIG 1 und 2 im Bereich zwischen der 24-ten und der 37-ten Minute zu entnehmen ist. Aus dem Vergleich beider Figuren ist zudem ersichtlich, dass der Schmelzvorgang bei der optimierten Betriebsweise mit einer Anpassung der Plasmaleitfähigkeit kürzer ist als beim herkömmlich betriebenen Lichtbogenofen.

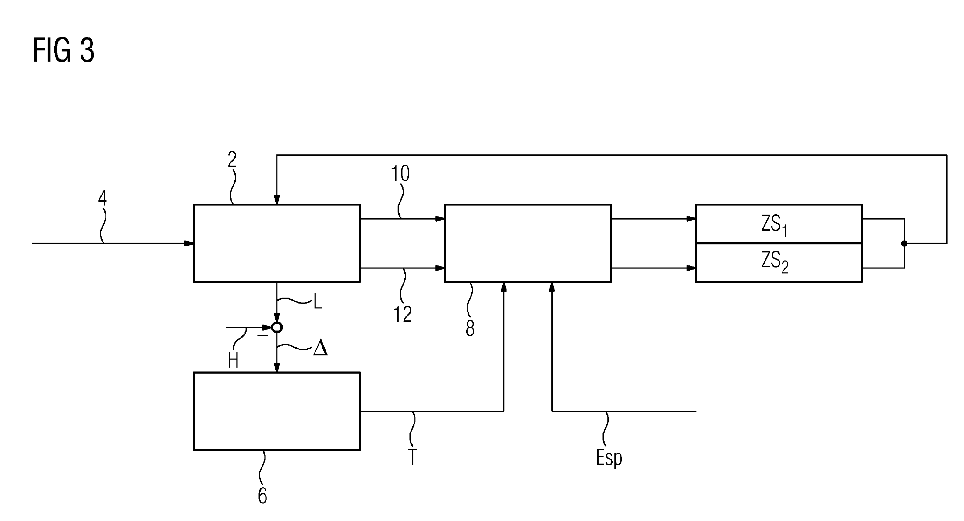

Ein Blockschaltbild für eine kontinuierliche Regelung der Plasmazusammensetzung im optimierten Betrieb eines nicht näher gezeigten Lichtbogenofens ist in FIG 3 dargestellt. Die Regelung basiert auf einer Bestimmung eines Prozesszustandes im Lichtbogenofen, wobei in Abhängigkeit des Prozesszustandes die Eigenschaften des Plasmas, insbesondere seine Feldstärke, angepasst werden.

Als Eingangsgröße eines im Lichtbogenofen erzeugten Plasmalichtbogens 2 dient der elektrische Arbeitspunkt 4, der durch eine Leistungsregelung des Lichtbogenofens vorgegeben ist. Weiterhin ist von Interesse, welcher Anteil Δ der Lichtbogenlänge L nicht durch Schamschlacke oder das Schrotthaufwerk abgeschirmt ist. Mit H wird hierbei eine Schaumschlackenhöhe bezeichnet. Da dieser Anteil Δ zu einer erhöhten thermischen Belastung führt, können als Maß hierfür die Kühlwasser-Tempera-turen T des Ofengefäßes herangezigen werden. Die ermittelten Temperaturen T werden zusammen mit der in das Einsatzgut eingebrachten spezifischen Energie Eₛₚ einer Signalverarbeitungseinrichtung 8 zugeführt.

Parallel zur Ermittlung des thermischen Zustands des Lichtbogenofens werden Körperschallmessungen und Strommessungen durchgeführt, welche unmittelbar Informationen darüber liefern, in wieweit die Lichtbögen eingehüllt sind und wie stabil sie brennen. Die Messsignale 10, 12 dieser Messungen werden ebenfalls der Steuer- oder Regeleinheit 8 zugeführt.

In Abhängigkeit der Eingangsinformationen wird mittels der Signalverarbeitungseinrichtung 8 die Menge und die Art des Zusatzstoffes ZS₁, ZS₂ berechnet, der in den Lichtbogen 2 eingebracht wird. Die Menge an Zusatzstoff ZS₁, ZS₂ ist dabei proportional zur Leistung des Lichtbogenofens. Bei einem gasförmigen Zusatzstoff ZS₁, ZS₂ wird dieser insbesondere über einen Gasdruck in der Leitung für den Zusatzstoff ZS₁, ZS₂ dosiert. Das Einbringen des Zusatzstoffes ZS₁, ZS₂ erfolgt insbesondere über eine Hohlelektrode des Lichtbogenofens, alternativ können Zufuhrvorrichtungen oder Injektoren an den Wänden, dem Deckel oder dem Boden des Lichtbogenofens vorgesehen sein.

Bei der Regelung der Plasmazusammensetzung über die Zusatzstoffe ZS₁, ZS₂ gilt im Allgemeinen, dass beim Schrottschmelzen, insbesondere zum Beginn des Schmelzvorganges, Plasma mit hoher Leitfähigkeit erforderlich ist, daher wird dem Plasma ein Zusatzstoff ZS₁ mit geringer Ionisationsenergie zugeführt und bei einem überwiegenden flüssigen Bad im Lichtbogenofen, insbesondere am Ende des Schmelzvorganges, die Leitfähigkeit des Plasmas geringer eingestellt wird, indem ein Zusatzstoff ZS₂ mit hoher Ionisationsenergie in den Lichtbogen eingebracht wird.

## Patentansprüche

1. Verfahren zum Betreiben eines Lichtbogenofens mit wenigstens einer Elektrode, wobei ein Schmelzgut im Lichtbogenofen mittels eines von der wenigstens einen Elektrode erzeugten Plasmalichtbogens (2) geschmolzen wird,
**dadurch gekennzeichnet, dass** der Plasmalichtbogen (2) reguliert wird, indem ein oder mehrere Zusatzstoffe (ZS₁, ZS₂), die die Plasmazusammensetzung beeinflussen, in das Plasma eingebracht werden, wobei zur Verringerung der Feldstärke des Plasmalichtbogens (2) mindestens ein Zusatzstoff (ZS₁) mit geringer Ionisationsenergie, insbesondere ein Metall oder ein Metallsalz, in das Plasma eingebracht wird und zur Erhöhung der Feldstärke des Plasmalichtbogens (2) mindestens ein Zusatzstoff (ZS₂) mit hoher Ionisationsenergie, insbesondere ein Intergas, in das Plasma eingebracht wird.

2. Verfahren nach Anspruch 1,
**dadurch gekennzeichnet, dass** ein Prozesszustand des Schmelzvorgangs bestimmt wird und die Feldstärke des Plasmalichtbogens in Abhängigkeit des Prozesszustandes reguliert wird.

3. Verfahren nach einem der vorhergehenden Ansprüche,
**dadurch gekennzeichnet, dass** die Menge der eingebrachten Zusatzstoffe (ZS₁, ZS₂) im Bereich 0,1-50 m³/h pro MW Lichtbogenleistung, insbesondere im Bereich 5-10 m³/h pro MW Lichtbogenleistung, dosiert wird.

4. Verfahren nach einem der vorhergehenden Ansprüche,
**dadurch gekennzeichnet, dass** die Menge der eingebrachten Zusatzstoffe über einen Vordruck p_{abs} geregelt wird.

5. Verfahren nach einem der vorhergehenden Ansprüche,
**dadurch gekennzeichnet, dass** die Zusatzstoffe (ZS₁, ZS₂) gasförmig sind oder als Aerosol vorliegen und über eine Regelung des Gasdruckes dosiert werden.

6. Verfahren nach einem der vorhergehenden Ansprüche,
**dadurch gekennzeichnet, dass** die wenigstens eine Elektrode als Hohlelektrode ausgebildet ist und die Zusatzstoffe (ZS₁, ZS₂) über die Elektrode zugeführt werden.

7. Verfahren nach einem der vorhergehenden Ansprüche, **dadurch gekennzeichnet, dass** die Zusatzstoffe (ZS₁, ZS₂) über Injektoren durch eine Ofenwand oder einen Ofendeckel in den Lichtbogenofen injiziert werden.

8. Verfahren nach einem der vorhergehenden Ansprüche, **dadurch gekennzeichnet, dass** die Zusatzstoffe (ZS₁, ZS₂) über Spülsteine am Boden des Lichtbogenofens injiziert werden.

9. Signalverarbeitungseinrichtung (8) für einen Lichtbogenofen, mit einem maschinenlesbaren Programmcode, welcher Steuerbefehle aufweist, die die Signalverarbeitungseinrichtung (8) zur Durchführung eines Verfahrens nach einem der Ansprüche 1 bis 8 veranlassen.

10. Maschinenlesbarer Programmcode für eine Signalverarbeitungseinrichtung (8) für einen Lichtbogenofen, wobei der Programmcode Steuerbefehle aufweist, die die Signalverarbeitungseinrichtung zur Durchführung des Verfahrens nach einem der Ansprüche 1 bis 8 veranlassen.

11. Speichermedium mit einem darauf gespeicherten maschinenlesbaren Programmcode gemäß Anspruch 10.

12. Lichtbogenofen mit wenigstens einer Elektrode zum Schmelzen eines Schmelzguts mittels eines von der wenigstens einen Elektrode erzeugten Plasmalichtbogens (2) und mit einer Signalverarbeitungseinrichtung (8) nach Anspruch 9.

13. Lichtbogenofen nach Anspruch 12,
**dadurch gekennzeichnet, dass** die Elektrode als Hohlelektrode für die Zufuhr der Zusatzstoffe (ZS₁, ZS₂) ausgebildet ist.

14. Lichtbogenofen nach Anspruch 12 oder 13,
**dadurch gekennzeichnet, dass** Injektoren für die Zusatzstoffe (ZS₁, ZS₂) an einer Ofenwand oder an einem Ofendeckel vorgesehen sind.

15. Lichtbogenofen nach einem der Ansprüche 12 bis 14, **dadurch gekennzeichnet, dass** Spülsteine für die Injektion der Zusatzstoffe (ZS₁, ZS₂) am Boden des Lichtbogenofens vorgesehen sind.

## Claims

1. Method for operating an arc furnace having at least one electrode, wherein a melting material is melted in the arc furnace by means of a plasma arc (2) produced by the at least one electrode,
**characterised in that** the plasma arc (2) is controlled by one or more additional substances (ZS₁, ZS₂), which influence the plasma composition, being introduced into the plasma, wherein for reducing the field strength of the plasma arc (2) at least one additional substance (ZS₁,) with low ionising energy, in particular a metal or a metal salt, is introduced into the plasma and for increasing the field strength of the plasma arc (2) at least one additional substance (ZS₂) with high ionising energy, in particular an inert gas, is introduced into the plasma.

2. Method according to claim 1,
**characterised in that** a process state of the melting process is determined and the field strength of the plasma arc is controlled according to the process state.

3. Method according to one of the preceding claims, **characterised in that** the quantity of the additional substances introduced (ZS₁, ZS₂) is metered in the range of 0.1-50 m³/h per MW arc output, in particular in the range of 5-10 m³/h per MW arc output.

4. Method according to one of the preceding claims, **characterised in that** the quantity of additional substances introduced is controlled by an admission pressure p_{abs}.

5. Method according to one of the preceding claims,
**characterised in that** the additional substances (ZS₁, ZS₂) are gaseous or present as an aerosol and are metered by controlling the gas pressure.

6. Method according to one of the preceding claims,
**characterised in that** the at least one electrode is configured as a hollow electrode and the additional substances (ZS₁, ZS₂) are supplied via the electrode.

7. Method according to one of the preceding claims,
**characterised in that** the additional substances (ZS₁, ZS₂) are injected into the arc furnace via injectors through a furnace wall or a furnace roof.

8. Method according to one of the preceding claims,
**characterised in that** the additional substances (ZS₁, ZS₂) are injected via porous plugs on the base of the arc furnace.

9. Signal processing device (8) for an arc furnace having a machine-readable program code which has control commands which cause the signal processing device (8) to carry out a method according to one of claims 1 to 8.

10. Machine-readable program code for a signal processing device (8) for an arc furnace, wherein the program code has control commands which cause the signal processing device to carry out the method according to one of claims 1 to 8.

11. Storage medium having a machine-readable program code stored therein according to claim 10.

12. Arc furnace having at least one electrode for melting a melting material by means of a plasma arc (2) produced by the at least one electrode and having a signal processing device (8) according to claim 9.

13. Arc furnace according to claim 12,
**characterised in that** the electrode is configured as a hollow electrode for the supply of additional substances (ZS₁, ZS₂).

14. Arc furnace according to claim 12 or 13,
**characterised in that** injectors for the additional substances (ZS₁, ZS₂) are provided on a furnace wall or on a furnace roof.

15. Arc furnace according to one of claims 12 to 14,
**characterised in that** porous plugs for the injection of the additional substances (ZS₁, ZS₂) are provided on the base of the arc furnace.

## Revendications

1. Procédé pour faire fonctionner un four à arc électrique ayant au moins une électrode, dans lequel on fait fondre un produit à fondre dans le four à arc électrique au moyen d'un arc plasma (2) produit par la au moins une électrode,
**caractérisé en ce qu'**on régule l'arc plasma (2) en introduisant dans le plasma un ou plusieurs additifs (ZS₁, ZS₂), qui influent sur la composition du plasma, dans lequel, pour diminuer l'intensité du champ de l'arc plasma (2), on introduit dans le plasma au moins un additif (ZS₁) ayant une énergie d'ionisation assez petite, notamment un métal ou un sel métallique, et, pour augmenter l'intensité du champ de l'arc plasma (2), on introduit dans le plasma au moins un additif (ZS₂) ayant une énergie d'ionisation assez grande, notamment un gaz inerte.

2. Procédé suivant la revendication 1,
**caractérisé en ce qu'**on détermine un état du processus de l'opération de fusion et on régule l'intensité du champ de l'arc plasma en fonction de l'état du processus.

3. Procédé suivant l'une des revendications précédentes,
**caractérisé en ce qu'**on ajoute la quantité des additifs (ZS₁, ZS₂) introduits dans la plage de 0,1 à 50 m³/h par MW de puissance d'arc électrique, notamment dans la plage de 5 à 10 m³/h par MW de puissance d'arc électrique.

4. Procédé suivant l'une des revendications précédentes,
**caractérisé en ce qu'**on régule la quantité des additifs introduits par une pression P_{abs} en amont.

5. Procédé suivant l'une des revendications précédentes,
**caractérisé en ce que** les additifs (ZS₁, ZS₂) sont gazeux ou se présentent sous forme d'aérosols et sont ajoutés de manière dosée par une régulation de la pression du gaz.

6. Procédé suivant l'une des revendications précédentes,
**caractérisé en ce que** la au moins une électrode est constituée sous la forme d'une électrode creuse et les additifs (ZS₁, ZS₂) sont apportés par l'électrode.

7. Procédé suivant l'une des revendications précédentes,
**caractérisé en ce qu'**on injecte les additifs (ZS₁, ZS₂) dans le four à arc électrique par des injecteurs traversant une paroi du four ou un couvercle du four.

8. Procédé suivant l'une des revendications précédentes, **caractérisé en ce qu'**on injecte les additifs (ZS₁, ZS₂) par des briques d'écoulement au fond du four à arc électrique.

9. Dispositif (8) de traitement du signal pour un four à arc électrique, ayant un code de programme pouvant être exécuté par un ordinateur et ayant des instructions de commande, qui font que le dispositif (8) de traitement du signal effectue un procédé suivant l'une des revendications 1 à 8.

10. Code de programme pouvant être exécuté par un ordinateur pour un dispositif (8) de traitement du signal pour un four à arc électrique, le code de programme ayant des instructions de commande, qui font que le dispositif de traitement du signal effectue le procédé suivant l'une des revendications 1 à 8.

11. Support de mémoire ayant un code de programme suivant la revendication 10, qui peut être exécuté par un ordinateur et qui y est mémorisé.

12. Four à arc électrique ayant au moins une électrode pour faire fondre un produit à faire fondre au moyen d'un arc plasma (2) produit par la au moins une électrode et ayant un dispositif (8) de traitement du signal suivant la revendication 9.

13. Four à arc électrique suivant la revendication 12,
**caractérisé en ce que** l'électrode est constituée sous la forme d'une électrode creuse pour l'apport des additifs (ZS₁, ZS₂).

14. Four à arc électrique suivant la revendication 12 ou 13,
**caractérisé en ce que** des injecteurs des additifs (ZS₁, ZS₂) sont prévus sur une paroi du four ou sur un couvercle du four.

15. Four à arc électrique suivant l'une des revendications 12 à 14,
**caractérisé en ce que** des briques d'écoulement sont prévues au fond du four à arc électrique pour l'injection des additifs (ZS₁, ZS₂).
